# EUROPEAN PATENT APPLICATION

(11) **EP 3 395 927 A1**
(43) Date of publication of application: **31.10.2018**
(21) Application number: 16836229.1
(22) Date of filing: 22.12.2016
(51) Int. Cl.: C09K 9/02, G02F 1/15

(54) **DYNAMIC RESPONSE COMPONENTS WITH AESTHETIC PROPERTIES**

(30) Priority: 22.12.2015 EP 15382656
(71) Applicant: Fundacion Cidetec, 20009 Donostia San Sebastián (Guipuzcoa) (ES)
(72) Inventor: ALESANCO, Yolanda, 20009 Donostia-San Sebastián (Guipuzcoa) (ES); TENA ZAERA, Ramón, 20009 Donostia-San Sebastián (Guipuzcoa) (ES); VIÑUALES, Ana, 20009 Donostia-San Sebastián (Guipuzcoa) (ES); ODRIOZOLA, Ibon, 20009 Donostia-San Sebastián (Guipuzcoa) (ES); RODRÍGUEZ PARRA, Francisco Javier, 20009 Donostia-San Sebastián (Guipuzcoa) (ES); CABAÑERO, Germán, 20009 Donostia-San Sebastián (Guipuzcoa) (ES); SOBRADO ARANGUENA, Javier, 48320 Ajangiz (Guipuzcoa) (ES)
(74) Representative: ZBM Patents - Zea, Barlocci & Markvardsen
(86) International application number: PCT/ES2016/070932
(87) International publication number: WO 2017/109265

(57) **Abstract**

The composition comprises: (a) a compound of formula (I), (b) a polymeric matrix comprising a crosslinked polymer, the matrix having a viscosity value comprised from 1 x 10⁻³ to 1 x 10¹² Pa·s, (c) a redox pair, and (d) a solvent, the compound of formula (I) and the redox pair being embedded in the polymeric matrix; and wherein: R₁ and R₂ are selected from: a (C₁-C₂₀)alkyl; (C₁-C₂₀)alkyl substituted; a 2 to 20-member heteroalkyl; a 2 to 20-member heteroalkyl substituted; (C₂-C₂₀)alkenyl; (C₂-C₂₀)alkenyl substituted; (C₂-C₂₀)alkynyl; (C₂-C₂₀)alkynyl substituted; and a known ring system; R₃ to R₁₀ are selected from hydrogen; (C₁-C₂₀)alkyl; (C₁-C₂₀)alkyl substituted; and nitro; and X is a monocharged anion.

The present invention also relates to processes for its preparation and to devices comprising it.

The multichromic composition shows a short switching time and low transmission in the most visible range, which makes it effective in blocking the whole visible radiation in smart windows.

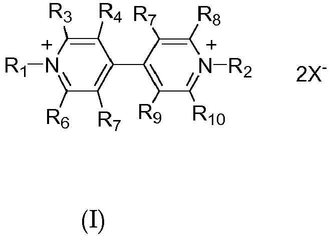

## Description

The present invention is related to the field of electrochromism. In particular, the present invention provides a multichromic composition, as well as a process for its preparation and a device comprising it.

### BACKGROUND ART

Electrochromic ("EC") materials, those that exhibit a reversible color change induced by an applied electric field, have been subjected to intense investigation because of their potential applications such as displays, including electronic paper, or smart windows for energy-efficient architecture. A prominent example of an EC application is found in the viologen based electrochromic anti-glare rearview mirrors in vehicles developed by Gentex.

Despite the significant improvements achieved from the last 30 years with regard to the electrochromic properties, a further challenge is to find electrochromic devices (ECDs) that exhibit multi-electrochromic behavior. Multi-electrochromism may significantly extend the market opportunities in the field of smart windows and climate adaptive building shell (CABS), due to their aesthetic properties providing diverse colorations and their ability to filter different wavelengths adjusting their light transmission properties over time under different applied potentials.

There are many reports dealing with the multi-electrochromism principle and preliminary proof-of-concept systems. However, most of the proposed multi-electrochromic devices show a lack of sufficiently diversified colors in their different colored states that may limit their practical use in the above described applications. The most performing strategies to obtain multi-electrochromic devices are based on the integration of different electrochromic materials of the same or different nature in particular device architectures such as dual-type (i.e. including color complementary anodically and cathodically EC materials) and patterned-based (e.g. pixel configuration: Nanochromics TM displays developed by NTERA, Ltd).

However, additionally to the complexity increase in the device preparation (e.g. larger number of layers in the stack architecture including in some cases multi-electrode configurations or need of complex patterned electrodes), the color versatility of these electrochromic devices may be significantly limited by the single coloration of the generally used mono-electrochromic materials.

In this regard, many approaches have also been developed with the aim of diversifying the colors of a single EC material. In this context, the conjugated polymers have been widely studied as promising multi-electrochromic materials through their band gap control by structural modification.

However, EC polymers may exhibit a lack of a sufficiently colorless transparent state and slow response time in comparison to several single molecular materials such as viologen. The latter exhibits three common redox forms: the dication, which is the most stable of them, the radical-cation formed by one electron reduction of the dication, and the neutral state (di-reduced form) obtained by two electron reduction of the dication. The usually colorless and highly colored aspect of dication and radical-cation forms, respectively, is currently exploited in mono-electrochromic devices.
But no means for stabilizing the di-reduced form, the more unstable, has been found.

### SUMMARY OF THE INVENTION

The present inventors have found that when a viologen compound is admixed with a polymer which (a) is crosslinked and (b) has a viscosity within the range from 1·10⁻³ to 1·10¹², the di-reduced unstable redox form of the viologen, is stabilized. As it is shown below, when the composition of the invention, comprising a viologen, was subjected to different potential fields, it was able of showing the three redox states, thus providing the colorless and two different well-defined colored states. Therefore, the present invention provides a multichromic composition.

As it has been stated above, until now the multichromism may be significantly limited by the single coloration of the generally used mono-electrochromic materials. With the use of the composition of the invention which is multichromic, the drawbacks related to the limited coloration and production are overcome.

Furthermore, the present inventors have also found that the composition of the invention shows this additional advantageous properties: (a) the switching time (i.e., the time required for 90% of the total transmittance change to occur at the maximum contrast wavelength for the colored (tc) and bleached steps (tb) is short; and (b) a very low transmission in most visible range, which makes it effective in blocking the whole visible radiation in smart windows.

Due to the excellent properties of the composition of the invention, it is now possible the development of easy-to-make multichromic devices. As it is disclosed below, single viologen-based dual-electrochromic devices of the invention, provides two different and well-defined colored states (i.e. green and red in addition to the colorless state). It is noteworthy that, as shown below, in an aqueous system, where no additive to increase the viscosity is included, even increasing the potential only one color change could be observed, contrary to the composition of the invention which, when subjected to different potentials, showed two color changes.

Without being bound to the theory, the present inventors believe that this can be attributed to the comproportionation mechanism: the electron transfer interaction between the di-reduced species and the dication would result in the generation of the radical-cations and consequently the green colored observed in the device. It has been little reported that di-reduced bipirydiliun species with aryl substituents can provide scarlet-red colors due to conjugation throughout the whole molecule but they appear to be very unstable owing to their powerful reducing properties. With the data provided below, it can be concluded that the viscosity of the polymeric matrix seems to avoid the di-reduced species and the dications to meet, preventing the comproportionation process and consequently the red coloration of the di-reduced species is observed upon applying suitable voltage. These results revealed that the presence of the crosslinked polymer at such values of viscosity acts as a stabilizer enabling dual electrochromic behavior.

Thus, the present invention provides in a first aspect multichromic composition comprising:
(a) a compound of formula (I) 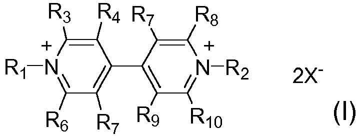
(b) a polymeric matrix comprising a crosslinked polymer, the matrix having a viscosity value comprised from 1 x 10⁻³ to 1 x 10¹² Pa·s,
(c) a redox pair, and
(d) a solvent
the compound of formula (I) and the redox pair being embedded in the polymeric matrix; and
wherein:
R₁ and R₂ are radicals independently selected from the group consisting of a (C₁-C₂₀)alkyl; (C₁-C₂₀)alkyl substituted with one or more (C₁-C₅)alkyl, -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals; a 2 to 20-member heteroalkyl; a 2 to 20-member heteroalkyl substituted with one or more -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals; (C₂-C₂₀)alkenyl; (C₂-C₂₀)alkenyl substituted with one or more (C₁-C₅)alkyl, -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals; (C₂-C₂₀)alkynyl; (C₂-C₂₀)alkynyl substituted with one or two (C₁-C₅)alkyl, -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals; and
a known ring system from 5 to 14 carbon atoms, the system comprising from 1 to 3 rings, where:
   each one of the rings is saturated, partially unsaturated, or aromatic;
   the rings are isolated, partially or totally fused,
   each one of the members forming the known ring system is selected from the group consisting of: -CH-, -CH₂-, -NH-, -N-, -SH-, -S-, and -O-; and
   the ring system is optionally substituted by one or more radicals independently selected from the group consisting of (C₁-C₆)alkyl, (C₁-C₆)haloalkyl, (C₁-C₆)alkoxy, (C₅-C₁₄)aryloxy, nitro, cyano, and halogen;
R₃ to R₁₀ are radicals independently selected from the group consisting of hydrogen; (C₁-C₂₀)alkyl; (C₁-C₂₀)alkyl substituted by one or more radicals selected from the group consisting of: halogen, -OH, and -NO₂; (C₁-C₂₀)alkoxy; cyano; and nitro; and
X is a monocharged anion.

In a second aspect, the present invention provides a process for preparing a multichromic composition having a viscosity value comprised from 1 x 10⁻³ to 1 x 10¹² Pa·s, as defined in the first aspect of the invention, the process comprising the steps of:
(a1) mixing an appropriate amount of a non-crosslinked polymer solution with an appropriate amount of a solution of a compound of formula (I) as defined above and an appropriate amount of a redox pair solution; and
(b1) adding an appropriate amount of crosslinking agent solution to the resulting mixture of step (a1) or, alternatively,
(a2) mixing an appropriate amount of non-crosslinked polymer solution with an appropriate amount of crosslinking agent solution;
(b2) adding an appropriate amount of compound of formula (I) with an appropriate amount of redox pair; and
(c2) mixing the solutions resulting from steps (a2) and (b2) above; or alternatively,
(a3) mixing an appropriate amount of non-crosslinked polymer with an appropriate amount of a compound of formula (I) and an appropriate amount of a redox pair,
(b3) dissolving the resulting mixture in an appropriate solvent; and
(c3) adding an appropriate amount of a polymeric crosslinking agent solution to the resulting solution of step (b3)

In a third aspect, the present invention provides a composition obtainable by the process of the second aspect of the invention.

The properties of the composition of the invention, such as high reproducibility and electrochemical reversibility, confer to multielectrochromic devices (hereinafter also referred as "multi-ECDs") with well-defined colorations (as shown below). Consequently, the composition of the invention may contribute an interesting accomplishment that addresses the shortcomings explained above and frequently present in multi-EC systems such as the device complexity or not distinct enough coloration in their different redox states, among others.

Therefore, in a fourth aspect, the present invention provides a device comprising the composition of the first aspect of the invention and a substrate.

In a fifth aspect, the present invention provides a process for preparing a device as defined in the fourth aspect of the invention, comprising the step of applying the composition of the invention over the surface of the substrate.

### BRIEF DESCRIPTION OF THE DRAWINGS

FIG. 1 shows the schematic illustration of a three-electrode electrochromic device wherein (1) is the working electrode, (2) is a laser scribing, (3) is a pseudoreference electrode, (4) is the layer of the composition of the invention, (5) is the counter electrode, and (6) is the spacer.
FIG. 2 shows the UV/V is transmittance spectra of the two-electrode ECD containing composition described in example 5 (without borax for comparative purposes) in off state (dot) and upon applying -1.4 V voltage (solid line) and -1,8 V (dashed line) .
FIG. 3 shows the UV/Vis transmittance spectra of the two-electrode ECD containing Composition 4h9 in off state (1) and its two colored states upon applying -1.4 V voltage (2) and -1,8 V (3) .

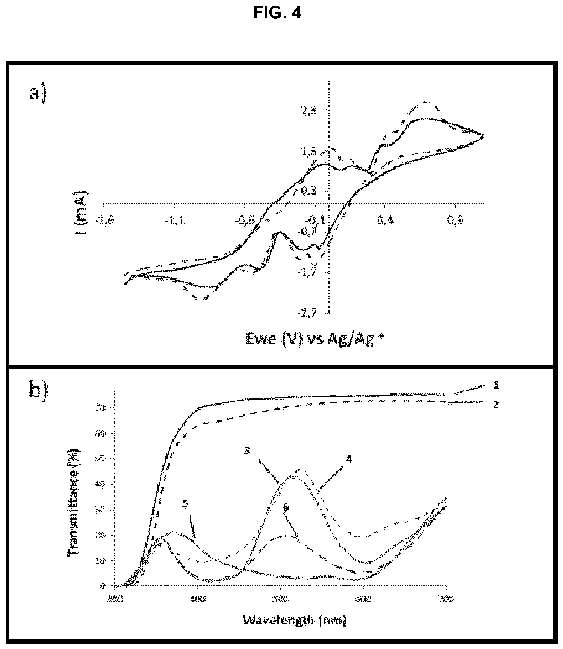

FIG. 4 A) Cyclic voltammogram of composition 4h9 (solid line) and aqueous system (dashed line) in three-electrode ECD configuration. B) UV/Vis transmittance spectra of the three-electrode ECD in bleached state (composition 4h9 (1) and aqueous system described in section 1.13 (2)), upon applying -0.5V (composition 4h9 (3) and aqueous system (4)) and upon applying -0.9 V voltages (composition 4h9 (5) and aqueous system (6)). Continuous lines represent the composition of the invention 4h9, whereas the dashed lines correspond to an aqueous system characterized by not comprising a crosslinked polymer.
FIG. 5 A) Cyclic voltammetry (CV) of Multi-color three- electrode ECD containing composition 5a and, in the inset, comparison of the multi-color three- electrode ECD containing composition 5a (solid line (1)) with CVs of compositions 4h9 (dash line (2)) and 3g9 (dot line (3)) separately. B) UV/Vis absorbance spectra of multi-color three- electrode ECD obtained for composition 5a after applying a switching voltages of 0 V (1), -0.7 V (2), -0.9 V (3), -1.1 V (4) and -1.7 V (5) respectively.
FIG. 6 shows the schematic illustration of the Rainbow-like ECD containing composition 5a provided with zoning design and colors observed in each row of the device while the suitable voltage were being applied.
FIG.7 shows the UV/Vis transmittance spectra of the three-electrode ECD containing Composition 5b in off state (dashed line) and upon applying -1.9 V voltage (solid line).

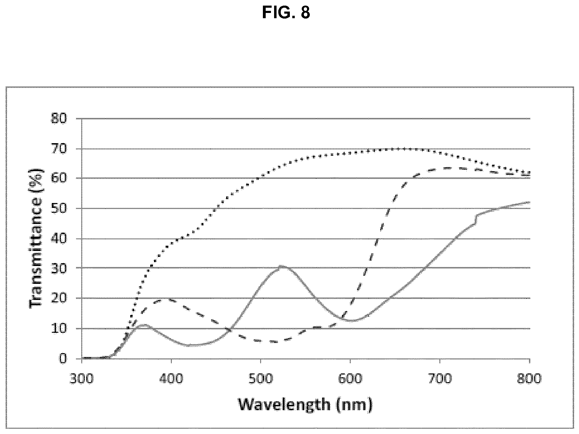

FIG. 8 shows the UV/Vis transmittance spectra of the two-electrode ECD containing composition described in example 6 (for comparative purposes) in off state (dot) and its two colored states upon applying -1.6 V voltage (solid line) and -2,0 V (dashed line) .

### DETAILED DESCRIPTION OF THE INVENTION

The present invention provides, in a first aspect, a multichromic composition comprising a compound of formula (I), a polymeric matrix, a redox pair, and a solvent, both the compound of formula (I) as well as the redox pair being embedded in the polymeric matrix.

In the present invention the term "embedded" when referred to the compound of formula (I), means that the compound is not bound to the components forming the polymeric matrix (the polymer backbone and the crosslinking moiety), and that it is stabilized in the polymeric matrix.

The term "alkyl" refers to a saturated straight or branched hydrocarbon chain which contains the number of carbon atoms specified in the description or claims. Examples include the group methyl, ethyl, propyl, isopropyl, butyl, isobutyl, sec-butyl, tert-butyl, n-pentyl, neo-pentyl and n-hexyl.

The term (C₂-C₂₀)alkenyl refers to a saturated straight, or branched alkyl chain which contains from 2 to 20 carbon atoms and that also contains one or more double bonds.

The term (C₂-C₂₀)alkynyl refers to a saturated straight, or branched alkyl chain which contains from 2 to 20 carbon atoms and that also contains one or more triple bonds. Examples include, among others, ethynyl, 1-propynyl, 2-butynyl, 1,3-butadinyl, 4-pentynyl, and 1-hexynyl.

The term (C₁-C₆)haloalkyl refers to a group resulting from the replacement of one or more hydrogen atoms from a (C₁-C₆)alkyl group with one or more, preferably from 1 to 6, halogen atoms, which can be the same or different. Examples include, among others, trifluoromethyl, fluoromethyl, 1-chloroethyl, 2-chloroethyl, 1-fluoroethyl, 2-fluoroethyl, 2-bromoethyl, 2-iodoethyl, 2,2,2-trifluoroethyl, pentafluoroethyl, 3-fluoropropyl, 3-chloropropyl, 2,2,3,3-tetrafluoropropyl, 2,2,3,3,3-pentafluoropropyl, heptafluoropropyl, 4-fluorobutyl, and nonafluorobutyl.

The term "(C₁-C₆)alkoxy" refers to an alkyloxy group, or a (C₁-C₆)alkyl-O-radical, having from 1 to 6 carbon atoms, the alkyl moiety having the same meaning as previously defined. Examples include, among others, methoxy, ethoxy, propoxy, isopropoxy, tert-butoxy, pentoxy and hexyloxy.

The term known "(C₅-C₁₄)aryl" refers to a ring system with 1-3 rings, the ring system having from 5 to 14 carbon atoms and from 1 to 3 rings, where:
each one of the rings is saturated, partially unsaturated, or aromatic;
the rings are isolated, partially or totally fused,
each one of the members forming the known ring system being selected from the group consisting of: -CH-, -CH₂-, -NH-, -N-, -SH-, -S-, and -O-.

The term "(C₅-C₁₄)aryloxy"" refers to an aryl-O- radical, the aryl moiety having the same meaning as previously defined.

The term "known" ring system as used herein refers to a ring system which is chemically feasible and is known in the art and so intends to exclude those ring systems that are not chemically possible.

The term "(C₂-C₂₀)heteroalkyl" means a 2 to 20-member heteroalkyl represents a known non-polymeric C-heteroalkyl radical consisting of from 2 to 20 members where at least one of the members is O, S, or NH, and the remaining members are selected from CH, C(=O), and CH₂.

According to the present invention when the ring system is formed by "isolated" rings means that the ring system is formed by two, three or four rings and said rings are bound via a bond from the atom of one ring to the atom of the other ring. The term "isolated" also embraces the embodiment in which the ring system has only one ring. Illustrative non-limitative examples of known ring systems consisting of one ring are those derived from: cyclopropyl, cyclobutyl, cyclopentyl, cyclohexyl, cycloheptyl, cyclopropenyl, cyclobutenyl, cyclopentenyl, phenyl, and cycloheptenyl.

According to the present invention when the ring system has rings "totally fused", means that the ring system is formed by two, three or four rings in which two or more atoms are common to two adjoining rings. Illustrative non-limitative examples are 1,2,3,4-tetrahydronaphthyl, 1-naphthyl, 2-naphthyl, anthryl, or phenanthryl,

According to the present invention when the ring system is "partially fused" it means that the ring system is formed by three or four rings, being at least two of said rings totally fused (i.e. two or more atoms being common to the two adjoining rings) and the remaining ring(s) being bound via a bond from the atom of one ring to the atom of one of the fused rings.

In one embodiment of the first aspect of the invention, the composition is a multielectrochromic composition. In the present invention "electrochromic" means that the composition reversibly changes color by applying a particular potential to cause electrochemical redox reactions in the material. In the present invention the term "multielectrochromic" means that the composition shows more than one color change.

In one embodiment of the first aspect of the invention, one of R₁ and R₂ is a known ring system as defined above. In another embodiment of the first aspect of the invention, one of one of R₁ and R₂ is a (C₅-C₄)aryl optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen In another embodiment of the first aspect of the invention, R₁ and R₂ are the same or different and mean a known ring system as defined above. In another embodiment of the first aspect of the invention, at least one of R₁ and R₂ is a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen. In another embodiment of the first aspect of the invention, both R₁ and R₂ are the same and represent a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen. In another embodiment of the first aspect of the invention, R₁ and R₂ are the same and represent a known ring system consisting of a single aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen. In another embodiment of the first aspect of the invention, R₁ and R₂ are phenyl radicals optionally substituted with one or more radicals selected from the group consisting of: (C₁-C₆)alkyl, (C₁-C₆)haloalkyl, (C₁-C₆)alkoxy, (C₅-C₁₄)aryloxy nitro, cyano, and halogen. In another embodiment of the first aspect of the invention, R₁ and R₂ are the same and are selected from the group consisting of: phenyl, toluene, ethylbenzene, propylbenzene, cumene, isobutylbenzene, dodecylbenzene, styrene, alpha-methylstyrene, o-Xylene, m-Xylene, p-Xylene, and p-Cymene, the ring being optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen. In another embodiment of the first aspect of the invention, R₁ and R₂ are the same and are phenyl radicals substituted with one cyano radical.

Alternatively, in one embodiment of the first aspect of the invention, one of R₁ or R₂ is a known ring system consisting of two totally fused aromatic rings, wherein each one of the aromatic rings is optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen. In another embodiment of the first aspect of the invention, both R₁ and R₂ are known ring systems consisting of two totally fused aromatic rings, wherein each one of the aromatic rings is optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen. In another embodiment of the first aspect of the invention, both R₁ and R₂ are the same and mean known ring systems consisting of two totally fused aromatic rings, wherein each one of the aromatic rings is optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen. In another embodiment of the first aspect of the invention, R₁ and R₂ are the same or different and are selected from 1,2,3,4-tetrahydronaphthyl, 1-naphthyl, 2-naphthyl, anthryl, and phenanthryl, said ring system being optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen.

In another embodiment of the first aspect of the invention, wherein R₃ to R₁₀ are hydrogen.

In another embodiment of the first aspect of the invention, the compound of formula (I) is one wherein R₁ and R₂ is a known ring system as defined above, and R₃ to R₁₀ are hydrogen. In another embodiment of the first aspect of the invention, R₁ and R₂ are the same or different and mean a known ring system as defined above, and R₃ to R₁₀ are hydrogen. In another embodiment of the first aspect of the invention, at least one of R₁ and R₂ is a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; and R₃ to R₁₀ are hydrogen. In another embodiment of the first aspect of the invention, both R₁ and R₂ are the same and represent a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; and R₃ to R₁₀ are hydrogen. In another embodiment of the first aspect of the invention, R₁ and R₂ are the same and represent a known ring system consisting of a single aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; and R₃ to R₁₀ are hydrogen. In another embodiment of the first aspect of the invention, R₁ and R₂ are phenyl radicals optionally substituted with one or more radicals selected from the group consisting of: (C₁-C₆)alkyl, (C₁-C₆)haloalkyl, (C₁-C₆)alkoxy, (C₅-C₁₄)aryloxy, nitro, cyano, and halogen; and R₃ to R₁₀ are hydrogen. In another embodiment of the first aspect of the invention, R₁ and R₂ are the same and are selected from the group consisting of: phenyl, toluene, ethylbenzene, propylbenzene, cumene, isobutylbenzene, dodecylbenzene, styrene, alpha-methylstyrene, o-Xylene, m-Xylene, p-Xylene, and p-Cymene, the ring being optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; and R₃ to R₁₀ are hydrogen. In another embodiment of the first aspect of the invention, R₁ and R₂ are the same and are phenyl radicals substituted with one cyano radical; and R₃ to R₁₀ are hydrogen.

In another embodiment of the first aspect of the invention, the monocharged anion is selected from the group consisting of: Cl⁻, Br⁻, I⁻, NO₃⁻, NO₂⁻, PF₆⁻, BF₄⁻, ClO₄⁻, CN⁻, SCN⁻, HSO₄⁻, (FSO₂)₂N⁻, (CF₃SO₂)₂N⁻, (C₂F₅SO₂)₂N⁻, (CF₃SO₂)₃C⁻, CF₃SO₃⁻, CF₃COO⁻, AsF₆⁻, CH₃SO₃⁻, CH₃COO⁻, (CN)₂N⁻, (CN)₃C⁻, and aromatic sulfonate. In another embodiment of the first aspect of the invention, the monocharged anion is halogen. In another embodiment of the first aspect of the invention the monocharged anion is Cl⁻.

In another embodiment of the first aspect of the invention, the compound of formula (I) is one wherein R₁ and R₂ is a known ring system as defined above, R₃ to R₁₀ are hydrogen; and X is halogen. In another embodiment of the first aspect of the invention, R₁ and R₂ are the same or different and mean a known ring system as defined above, R₃ to R₁₀ are hydrogen, and X is halogen. In another embodiment of the first aspect of the invention, at least one of R₁ and R₂ is a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and X is halogen. In another embodiment of the first aspect of the invention, both R₁ and R₂ are the same and represent a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and X is halogen. In another embodiment of the first aspect of the invention, R₁ and R₂ are the same and represent a known ring system consisting of a single aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and X is halogen. In another embodiment of the first aspect of the invention, R₁ and R₂ are phenyl radicals optionally substituted with one or more radicals selected from the group consisting of: (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and X is halogen. In another embodiment of the first aspect of the invention, R₁ and R₂ are the same and are selected from the group consisting of: phenyl, toluene, ethylbenzene, propylbenzene, cumene, isobutylbenzene, dodecylbenzene, styrene, alpha-methylstyrene, o-Xylene, m-Xylene, p-Xylene, and p-Cymene, the ring being optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and X is halogen. In another embodiment of the first aspect of the invention, R₁ and R₂ are the same and are phenyl radicals substituted with one cyano radical; R₃ to R₁₀ are hydrogen; and X is halogen.

In another embodiment of the first aspect of the invention, the compound of formula (I) corresponds to:

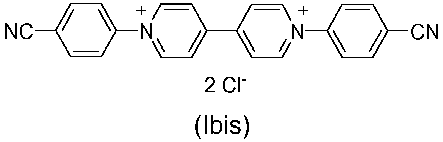

In another embodiment of the first aspect of the invention, the compound of formula (I) is at a concentration comprised from 0.15 to 30 mM. In another embodiment of the first aspect of the invention, the compound of formula (I) is at a concentration comprised from 0.25 to 25 mM. In another embodiment of the first aspect of the invention, the compound of formula (I) is at a concentration comprised from 0.25 to 10 mM. In another embodiment of the first aspect of the invention, the compound of formula (I) is at a concentration comprised from 0.25 a 4. In another embodiment of the first aspect of the invention, the compound of formula (I) is at a concentration of 0.2, 0.3, 0.4, 0.5, 0.6, 0.7, 0.8, 0.9, 1.0, 2.0, 3.0, 4.0, 5.0, 6.0, 7.0, 8.0, 9.0, 10.0, 11.0, 12.0, 13.0, 14.0, 15.0, 16.0, 17.0, 18.0, 19.0, 20.0, 21.0, 22.0, 23.0, 24.0, 25.0, 26.0, 27.0, 28.0, 29.0, or 30.0 mM. In another embodiment of the first aspect of the invention, the compound of formula (I) is at a concentration of 3.5 mM.

The term "polymer" refers to a macromolecule composed of many repeated subunits, known as monomers. Polymers, both natural and synthetic, are created via polymerization of many monomers. The polymer is composed of polymer chains, said chains being typically linear or branched.

In the present invention the term "crosslinked polymer" is used in a wide sense, and refers to any type of covalent polymer network, dynamic or reversible covalent polymer networks or supramolecular polymer networks. Illustrative non-limitative examples of covalent bonds, useful in linking polymer chains, are: ether (-C(=O)-), thioether (-S(=O)-), ester (-O-C(=O)-), amide (-C(=O)-NH-), disulfide urethane (-N-C(=S)-S-), thiourethane (-N-C(=O)-S-), and borate (-O-B-O-) bonds. The crosslink between two polymeric chains can be performed by chemical reactions that are initiated by heat, pressure, change in pH, or radiation. For example, mixing of an unpolymerized or partially polymerized resin with specific chemicals called crosslinking reagents results in a chemical reaction that forms crosslinks. Crosslinkings are selected on the basis of their chemical reactivities (i.e., specificity for particular function groups) and other chemical properties that affect their behavior in different applications:
(a) Chemical specificity refers to the reactive target(s) of the crosslinking's reactive ends. A general consideration is whether the reagent has the same or different reactive groups at either end;
(b) Spacer arm length refers to the molecular span of a crosslinking (i.e., the distance between conjugated molecules). A related consideration is whether the arm is cleavable (i.e., whether the linkage can be reversed or broken when desired); and
(c) Spontaneously reactive or photoreactive groups in a crosslinking affect whether it react as soon as it is added to a sample or can be activated at a specific time by exposure to UV light.

In one embodiment, the crosslinking agent is a boron compound selected from the group consisting of: boric acid; boric anhydride; borate (C₁-C₄)alkyl ester; (C₁-C₄)alkyl; (C₅-C₆)aryl boronic acids and their (C₁-C₄)alkyl esters; and a metallic borate, the metal being selected from K, Na, Li, Ca and Mg. In another embodiment, the crosslinking is a metallic borate. In another embodiment, the crosslinking agent is borax (Na₂B₄O₇·10H₂O).

In another embodiment of the first aspect of the invention, the crosslinked polymer is selected from the group consisting of a crosslinked polyvinyl alcohol, a crosslinked polyhydroxyalkylacrylate, a crosslinked polyhydroxyalkyl methacrylate, a crosslinked polysaccharide, and a crosslinked polyalkylenglycol, and a combination thereof. In another embodiment, the crosslinked polymer is a crosslinked polyvinyl alcohol.

In another embodiment of the first aspect of the invention, the compound of formula (I) is one wherein R₁ and R₂ is a known ring system as defined above, R₃ to R₁₀ are hydrogen, and the polymeric matrix comprises a crosslinked polyvinyl alcohol. In another embodiment of the first aspect of the invention, R₁ and R₂ are the same or different and mean a known ring system as defined above, R₃ to R₁₀ are hydrogen, and the polymeric matrix comprises a crosslinked polyvinyl alcohol. In another embodiment of the first aspect of the invention, at least one of R₁ and R₂ is a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and the polymeric matrix comprises a crosslinked polyvinyl alcohol. In another embodiment of the first aspect of the invention, both R₁ and R₂ are the same and represent a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and the polymeric matrix comprises a crosslinked polyvinyl alcohol. In another embodiment of the first aspect of the invention, R₁ and R₂ are the same and represent a known ring system consisting of a single aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and the polymeric matrix comprises a crosslinked polyvinyl alcohol. In another embodiment of the first aspect of the invention, R₁ and R₂ are phenyl radicals optionally substituted with one or more radicals selected from the group consisting of: (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and the polymeric matrix comprises a crosslinked polyvinyl alcohol. In another embodiment of the first aspect of the invention, R₁ and R₂ are the same and are selected from the group consisting of: phenyl, toluene, ethylbenzene, propylbenzene, cumene, isobutylbenzene, dodecylbenzene, styrene, alpha-methylstyrene, o-Xylene, m-Xylene, p-Xylene, and p-Cymene, the ring being optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and the polymeric matrix comprises a crosslinked polyvinyl alcohol. In another embodiment of the first aspect of the invention, R₁ and R₂ are the same and are phenyl radicals substituted with one cyano radical; R₃ to R₁₀ are hydrogen; and the polymeric matrix comprises a crosslinked polyvinyl alcohol.

In another embodiment of the first aspect of the invention, the compound of formula (I) is one wherein R₁ and R₂ is a known ring system as defined above, R₃ to R₁₀ are hydrogen; X is halogen; and the polymeric matrix comprises a crosslinked polyvinyl alcohol. In another embodiment of the first aspect of the invention, R₁ and R₂ are the same or different and mean a known ring system as defined above, R₃ to R₁₀ are hydrogen, X is halogen; and the polymeric matrix comprises a crosslinked polyvinyl alcohol. In another embodiment of the first aspect of the invention, at least one of R₁ and R₂ is a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; X is halogen; and the polymeric matrix comprises a crosslinked polyvinyl alcohol. In another embodiment of the first aspect of the invention, both R₁ and R₂ are the same and represent a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; X is halogen; and the polymeric matrix comprises a crosslinked polyvinyl alcohol. In another embodiment of the first aspect of the invention, R₁ and R₂ are the same and represent a known ring system consisting of a single aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; X is halogen; and the polymeric matrix comprises a crosslinked polyvinyl alcohol. In another embodiment of the first aspect of the invention, R₁ and R₂ are phenyl radicals optionally substituted with one or more radicals selected from the group consisting of: (C₁-C₆)alkyl, (C₁-C₆)haloalkyl, (C₁-C₆)alkoxy, nitro, cyano, and halogen; R₃ to R₁₀ are hydrogen; X is halogen; and the polymeric matrix comprises a crosslinked polyvinyl alcohol. In another embodiment of the first aspect of the invention, R₁ and R₂ are the same and are selected from the group consisting of: phenyl, toluene, ethylbenzene, propylbenzene, cumene, isobutylbenzene, dodecylbenzene, styrene, alpha-methylstyrene, o-Xylene, m-Xylene, p-Xylene, and p-Cymene, the ring being optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; X is halogen; and the polymeric matrix comprises a crosslinked polyvinyl alcohol. In another embodiment of the first aspect of the invention, R₁ and R₂ are the same and are phenyl radicals substituted with one cyano radical; R₃ to R₁₀ are hydrogen; X is halogen; and the polymeric matrix comprises a crosslinked polyvinyl alcohol.

In the present invention, the term "polyvinyl alcohol" is to be understood as composing mainly of 1,3-diol linkages [-CH₂-CH(OH)-CH₂-CH(OH)-], although a low percent of 1,2-diols [-CH₂-CH(OH)-CH(OH)-CH₂-] occur, depending on the conditions for the polymerization of the vinyl ester precursor.

In another embodiment of the first aspect of the invention, the crosslinked polymer is a borate crosslinked polyvinyl alcohol. The borate crosslinked polyvinyl alcohol has been previously characterized by McLaughlin M. et al., ("The Gelation of Poly(Vinyl Alcohol) with Na2B4O7·10H2O: Killing Slime", 1997, J. Chem. Educ. 47, 97-99)and has the structure (II):

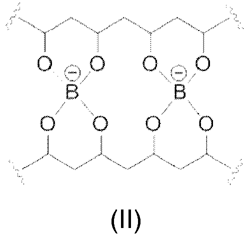

In another embodiment of the first aspect of the invention, the compound of formula (I) is one wherein R₁ and R₂ is a known ring system as defined above, R₃ to R₁₀ are hydrogen, and the polymeric matrix comprises a borate crosslinked polyvinyl alcohol comprising units of formula (II). In another embodiment of the first aspect of the invention, R₁ and R₂ are the same or different and mean a known ring system as defined above, R₃ to R₁₀ are hydrogen, and the polymeric matrix comprises a borate crosslinked polyvinyl alcohol comprising units of formula (II). In another embodiment of the first aspect of the invention, at least one of R₁ and R₂ is a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and the polymeric matrix comprises a borate crosslinked polyvinyl alcohol comprising units of formula (II). In another embodiment of the first aspect of the invention, both R₁ and R₂ are the same and represent a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and the polymeric matrix comprises a borate crosslinked polyvinyl alcohol comprising units of formula (II). In another embodiment of the first aspect of the invention, R₁ and R₂ are the same and represent a known ring system consisting of a single aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and the polymeric matrix comprises a borate crosslinked polyvinyl alcohol comprising units of formula (II). In another embodiment of the first aspect of the invention, R₁ and R₂ are phenyl radicals optionally substituted with one or more radicals selected from the group consisting of: (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and the polymeric matrix comprises a borate crosslinked polyvinyl alcohol comprising units of formula (II). In another embodiment of the first aspect of the invention, R₁ and R₂ are the same and are selected from the group consisting of: phenyl, toluene, ethylbenzene, propylbenzene, cumene, isobutylbenzene, dodecylbenzene, styrene, alpha-methylstyrene, o-Xylene, m-Xylene, p-Xylene, and p-Cymene, the ring being optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; and the polymeric matrix comprises a borate crosslinked polyvinyl alcohol comprising units of formula (II). In another embodiment of the first aspect of the invention, R₁ and R₂ are the same and are phenyl radicals substituted with one cyano radical; R₃ to R₁₀ are hydrogen; and the polymeric matrix comprises a borate crosslinked polyvinyl alcohol comprising units of formula (II).

In another embodiment of the first aspect of the invention, the compound of formula (I) is one wherein R₁ and R₂ is a known ring system as defined above, R₃ to R₁₀ are hydrogen; X is halogen; and the polymeric matrix comprises a borate crosslinked polyvinyl alcohol comprising units of formula (II). In another embodiment of the first aspect of the invention, R₁ and R₂ are the same or different and mean a known ring system as defined above, R₃ to R₁₀ are hydrogen, X is halogen; and the polymeric matrix comprises a borate crosslinked polyvinyl alcohol comprising units of formula (II). In another embodiment of the first aspect of the invention, at least one of R₁ and R₂ is a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; X is halogen; and the polymeric matrix comprises a borate crosslinked polyvinyl alcohol comprising units of formula (II). In another embodiment of the first aspect of the invention, both R₁ and R₂ are the same and represent a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; X is halogen; and the polymeric matrix comprises a borate crosslinked polyvinyl alcohol comprising units of formula (II). In another embodiment of the first aspect of the invention, R₁ and R₂ are the same and represent a known ring system consisting of a single aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; X is halogen; and the polymeric matrix comprises a borate crosslinked polyvinyl alcohol comprising units of formula (II). In another embodiment of the first aspect of the invention, R₁ and R₂ are phenyl radicals optionally substituted with one or more radicals selected from the group consisting of: (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; X is halogen; and the polymeric matrix comprises a borate crosslinked polyvinyl alcohol comprising units of formula (II). In another embodiment of the first aspect of the invention, R₁ and R₂ are the same and are selected from the group consisting of: phenyl, toluene, ethylbenzene, propylbenzene, cumene, isobutylbenzene, dodecylbenzene, styrene, alpha-methylstyrene, o-Xylene, m-Xylene, p-Xylene, and p-Cymene, the ring being optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen; R₃ to R₁₀ are hydrogen; X is halogen; and the polymeric matrix comprises a borate crosslinked polyvinyl alcohol comprising units of formula (II). In another embodiment of the first aspect of the invention, R₁ and R₂ are the same and are phenyl radicals substituted with one cyano radical; R₃ to R₁₀ are hydrogen; X is halogen; and the polymeric matrix comprises a borate crosslinked polyvinyl alcohol comprising units of formula (II).

The viscosity of the polymeric matrix is measured with a controlled stress rheometer, in particular TA instruments AR2000ex, using a 40 mm plate-plate geometry. The flow procedure with a shear rate (s-1) from 0.00001 to 1 was monitored at a constant temperature of 25 °C . In one embodiment, the viscosity of the polymeric matrix, forming part of any of the compositions provided above or below as embodiments, is higher than 1 x 10⁻³ and equal or lower than 1 x 10¹² Pa·s. In another embodiment, the viscosity of the polymeric matrix, forming part of any of the compositions provided above or below, is comprised from 1·10⁻² to 1·10⁶ Pa·s. In another embodiment, the viscosity of the polymeric matrix, forming part of any of the compositions provided above or below, is comprised from 1·10⁻² to 5·10⁵ Pa·s. In one embodiment, the viscosity of the polymeric matrix, forming part of any of the compositions provided above or below as embodiments, is comprised from 1·10⁻² to 5·10² Pa·s. In another embodiment, the viscosity of the polymeric matrix is comprised from 1·10⁻¹ to 4·10² Pa·s. In another embodiment, the viscosity of the polymeric matrix is about 300 Pa·s. In another embodiment, the viscosity of the polymeric matrix is about 5·10⁵ Pa·s.

In the present invention, the expression "redox pair" is to be understood as an electron mediator which consists of an oxidizing and/or reducing agent which are involved in the redox reaction suffered by the compound of formula (I). Thus, in the reaction, the reducing agent loses electrons, which are accepted by the compound of formula (I), and the oxidizing agent gains electrons from the compound of formula (I). Illustrative non-limitative examples of redox pair includes Fe³⁺/Fe²⁺, Mn⁴⁺/Mn²⁺, Sn⁴⁺/Sn²⁺, Cu²⁺/Cu⁺, Ni³⁺/Ni²⁺, Mn³⁺/Mn²⁺, Cr⁴⁺/Cr³⁺, and Co³⁺/Co²⁺, 5,10-Dihydro-5,10-dimethylphenazine, N,N,N',N'-tetramethyl-p-phenylene-diamine, N,N,N',N'-tetraphenyl-p-phenylenediamine, bis-3,3'-diethyl-2,2'-benzothiazole azine, tetrathiafulvalene, ferrocene, and hydroquinone, among others. In one embodiment, the redox pair is Fe(CN)₆]³⁻/[Fe(CN)₆]⁴⁻. This redox couple is reversible and entails no making or breaking of Fe-C bonds:

[Fe(CN)₆]³⁻ + e⁻ → [Fe(CN)₆]⁴⁻

In another embodiment of the first aspect of the invention, the redox pair is at a concentration comprised from 0.1 to 20 mM. In another embodiment of the first aspect of the invention, the redox pair is at a concentration comprised from 0.2 to 10 mM. In another embodiment of the first aspect of the invention, the redox pair is at a concentration comprised from 0.2 to 5. In another embodiment of the first aspect of the invention, the redox pair is at a concentration of 0.1, 0.2, 0.3, 0.4, 0.5, 0.6, 0.7, 0.8, 0.9, 1.0, 2.0, 3.0, 4.0, 5.0, 6.0, 7.0, 8.0, 9.0, 10.0, 11.0, 12.0, 13.0, 14.0, 15.0, 16.0, 17.0, 18.0, 19.0 or 20.0. In another embodiment of the first aspect of the invention, the redox pair is at a concentration of 4 mM.

In another embodiment of the first aspect of the invention, the composition comprises: (a) the compound of formula (Ibis), (b) the borate crosslinked polyvinyl alcohol comprising units of formula (II), and (c) the redox pair Fe²⁺/Fe³⁺. In another embodiment of the first aspect of the invention, the composition comprises: (a) the compound of formula (Ibis) at a concentration of 3.5 mM, (b) the borate crosslinked polyvinyl alcohol comprising units of formula (II), wherein the polymeric matrix has a viscosity comprised from 1·10⁻² to 5·10² Pa·s, and (c) the redox pair Fe(CN)₆]³⁻/[Fe(CN)₆]⁴⁻ at a concentration of 4 mM. In another embodiment of the first aspect of the invention, the composition comprises: (a) the compound of formula (Ibis), (b) the borate crosslinked polyvinyl alcohol comprising units of formula (II), and (c) the redox pair Fe(CN)₆]³⁻/[Fe(CN)₆]⁴⁻. In another embodiment of the first aspect of the invention, the composition comprises: (a) the compound of formula (Ibis) at a concentration of 3.5 mM, (b) the borate crosslinked polyvinyl alcohol comprising units of formula (II), wherein the polymeric matrix has a viscosity about 300 Pa·s, and (c) the redox pair Fe(CN)₆]³⁻/[Fe(CN)₆]⁴⁻ at a concentration of 4 mM.

In another embodiment, the solvent is selected from the group consisting of ethyleneglycol, dimethyl sulfoxide (DMSO), and water. In another embodiment, the solvent is water.

In another embodiment of the first aspect of the invention, the composition comprises: (a) the compound of formula (Ibis), (b) a borate crosslinked polyvinyl alcohol, (c) the redox pair Fe(CN)₆]³⁻/[Fe(CN)₆]⁴⁻, and (d) the solvent is water. In another embodiment of the first aspect of the invention, the composition comprises: (a) the compound of formula (Ibis) at a concentration of 3.5 mM, (b) a borate crosslinked polyvinyl alcohol, wherein the polymeric matrix has a viscosity comprised from 1·10⁻² to 5·10² Pa·s, (c) the redox pair Fe(CN)₆]³⁻/[Fe(CN)₆]⁴⁻ at a concentration of 4 mM, and (d) the solvent is water. In another embodiment of the first aspect of the invention, the composition comprises: (a) the compound of formula (Ibis) at a concentration of 3.5 mM, (b) a borate crosslinked polyvinyl alcohol having a viscosity about 300 Pa·s, (c) the redox pair Fe(CN)₆]³⁻/[Fe(CN)₆]⁴⁻ at a concentration of 4 mM; and (d) the solvent is water.

In another embodiment of the first aspect of the invention, the composition comprises: (a) the compound of formula (Ibis), (b) the borate crosslinked polyvinyl alcohol comprising units of formula (II), (c) the redox pair Fe(CN)₆]³⁻/[Fe(CN)₆]⁴⁻, and (d) the solvent is water. In another embodiment of the first aspect of the invention, the composition comprises: (a) the compound of formula (Ibis) at a concentration of 3.5 mM, (b) the borate crosslinked polyvinyl alcohol comprising units of formula (II), wherein the polymeric matrix has a viscosity comprised from 1·10⁻² to 5·10² Pa·s, (c) the redox pair Fe(CN)₆]³⁻/[Fe(CN)₆]⁴⁻ at a concentration of 4 mM, and (d) the solvent is water. In another embodiment of the first aspect of the invention, the composition comprises: (a) the compound of formula (Ibis) at a concentration of 3.5 mM, (b) the borate crosslinked polyvinyl alcohol comprising units of formula (II), wherein the polymeric matrix has a viscosity about 300 Pa·s, (c) the redox pair Fe(CN)₆]³⁻/[Fe(CN)₆]⁴⁻ at a concentration of 4 mM; and (d) the solvent is water.

In another embodiment of the first aspect of the invention, the multichromic composition comprises one or more further viologens, in addition to the compound of formula (I).

In the present invention, the term "viologen" encompasses 1,1'-disubstituted-4,4'-bipyridilium salts having the ability to change color reversibly many times upon reduction and oxidation. The compounds of formula (I) are viologens, as having this ability.

In one embodiment, the multichromic composition comprises one additional viologen.

In another embodiment, optionally in combination with any of the embodiments provided above or below, the further viologen is a compound of formula (III): 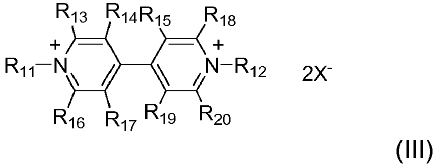 wherein
R₁₁ and R₁₂ are the same or different and are selected from the group consisting of a (C₁-C₂₀)alkyl; (C₁-C₂₀)alkyl substituted with one or more (C₁-C₅)alkyl, -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals; a 2 to 20-member heteroalkyl; a 2 to 20-member heteroalkyl substituted with one or more -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals;
R₁₃ to R₂₀ are radicals independently selected from the group consisting of hydrogen; (C₁-C₂₀)alkyl; (C₁-C₂₀)alkyl substituted by one or more radicals selected from the group consisting of: halogen, -OH, and -NO₂; (C₁-C₂₀)alkoxy; cyano; and nitro; and
X is a monocharged anion.

In another embodiment, optionally in combination with any of the embodiments provided above or below, the further viologen is a compound of formula (III) wherein R₁₁ and R₁₂ are the same.

In another embodiment, optionally in combination with any of the embodiments provided above or below, the further viologen is a compound of formula (III) wherein R₁₁ and R₁₂ are (C₁-C₂₀)alkyl.

In another embodiment, optionally in combination with any of the embodiments provided above or below, the further viologen is a compound of formula (III) wherein R₁₁ and R₁₂ are the same and represent (C₁-C₂₀)alkyl. In another embodiment, optionally in combination with any of the embodiments provided above or below, R₁₁ and R₁₂ are the same and represent (C₁-C₁₀)alkyl. In another embodiment, optionally in combination with any of the embodiments provided above or below, the further viologen is a compound of formula (III) wherein R₁₁ and R₁₂ are the same and represent (C₁-C₅)alkyl.

In another embodiment, optionally in combination with any of the embodiments provided above or below, the further viologen is a compound of formula (III) wherein R₁₃ to R₂₀ are the same. In another embodiment, optionally in combination with any of the embodiments provided above or below, the further viologen is a compound of formula (III) wherein R₁₃ to R₂₀ are the same and represent -H.

In one embodiment, the additional viologen is selected from 1,1'-diethyl-4,4'-bipyridinium dibromide, 1,1'-diethyl-4,4'-bipyridinium diperchlorate, 1,1'-dimethyl-4,4'-bipyridinium dichloride hydrate, 1,1'-dipropyl-4,4'-bipyridinium dibromide, 1,1'-dibutyl-4,4'-bipyridinium dibromide.

Alternatively, in another embodiment, the further viologen can be 1,1'-dibenzyl-4,4'-bipyridinium dibromide.

In another embodiment, the one or more additional viologen(s) are at a concentration comprised from 0.5 to 40 mM. In another embodiment, the additional viologen is at a concentration of 20 mM. In another embodiment, the one additional viologen is 1,1'-diethyl-4,4'-bipyridinium dibromide at a concentration in the range of 0.5 to 30 mM. In another embodiment, the one additional viologen is 1,1'-diethyl-4,4'-bipyridinium dibromide at a concentration in the range of 2.5 to 25 mM. In another embodiment, the one additional viologen is 1,1'-diethyl-4,4'-bipyridinium dibromide at a concentration of 20 mM.

It is the first time that a formulation containing two viologens provides five well-defined colorations. As it is shown below, the resulting devices showed multi-electrochromic behavior including colorless, green, pink-violet, orange and purple, involving just a single EC layer sandwiched between two electrodes. The easy design involves just applying a layer of the composition of the first aspect of the invention, containing two-viologens in a single layer sandwiched between different electrodes on a common patterned substrate. This allows the fabrication of rainbow-like electrochromic devices in which the color of each area can be adjusted independently over time between different colors under suitable applied potentials, bringing us closer to rainbow-like windows.

In a second aspect, the present invention provides a process for preparing the multichromic composition as defined in the first aspect of the invention.

All the embodiments mentioned above regarding the compound of formula (I) and the redox pair are also embodiments of the process of the second aspect of the invention.

In the present invention, the term "non-crosslinked polymer" is a polymer wherein the polymeric chains are not bound. Illustrative non-limitative examples of non-crosslinked polymer are a non-crosslinked polyvinyl alcohol, a non-crosslinked polyhydroxyalkylacrylate, a non-crosslinked polyhydroxyalkyl methacrylate, a non-crosslinked polysaccharide, and a non-crosslinked polyalkylenglycol, and a combination thereof. In another embodiment, the non-crosslinked polymer is a non-crosslinked polyvinyl alcohol.

In the present invention, the expression "amount of a solution" when referred to the solution of non-crosslinked polymer, pair redox, crosslinking agent or the compound of formula (I) means the volume of the solution.

In another embodiment of the process of the second aspect of the invention, the mixture of the non-crosslinked polymer solution with the crosslinking agent solution is performed at a volume ratio comprised from 10:1 to 2:1. In another embodiment, the volume ratio is 4:1.

In the present invention, the expression "volume ratio" means the volume of the mixture resulting from step (a1) with respect to the volume of the crosslinking agent, said volumes being expressed in the same units.

In another embodiment of the second aspect of the invention, the process comprises a further step of mixing the resulting mixture of step (b1) or (c2) or (c3) with one or more additional viologens. In another embodiment of the second aspect of the invention, the process comprises a further step of mixing the resulting mixture of step (b1) or (c2) or (c3) with one or more additional viologens, wherein the further one or more viologen(s) form(s) part of a composition further comprising a crosslinked polymer and a redox pair, both as defined in any of the above embodiments. In another embodiment of the second aspect of the invention, the one or more additional viologens form(s) part of a composition further comprising a borate crosslinked polymer comprising units of formula (II) and a redox pair Fe(CN)₆]³⁻/[Fe(CN)₆]⁴⁻.

The composition comprising the one or more further viologen(s) can be prepared by routine procedures but also following the steps (a1) to (b1) or alternatively (a2) to (c2) or alternatively (a3) to (c3) disclosed above for the process of the second aspect of the invention.

In one embodiment of the process of the second aspect of the invention, the non-crosslinked polymer is a polyvinyl alcohol and the crosslinking agent is borax. In another embodiment, the non-crosslinked polymer is a polyvinyl alcohol, the crosslinking agent is borax, and the molar ratio polyvinyl alcohol:borax is comprised from 87:1 to 17:1. In another embodiment, the non-crosslinked polymer is a polyvinyl alcohol, the crosslinking agent is borax, and the molar ratio polyvinyl alcohol:borax is comprised from 70:1 to 30:1. In another embodiment, the non-crosslinked polymer is a polyvinyl alcohol, the crosslinking agent is borax, and the molar ratio polyvinyl alcohol:borax is comprised from 50:1 to 30:1. In another embodiment, the non-crosslinked polymer is a polyvinyl alcohol, the crosslinking agent is borax, and the molar ratio polyvinyl alcohol:borax is comprised from 40:1 to 30:1. In another embodiment, the non-crosslinked polymer is a polyvinyl alcohol, the crosslinking agent is borax, and the molar ratio polyvinyl alcohol:borax is about 34:1.

In the present invention, the expression "molar ratio" means the number of moles of polyvinyl alcohol polymer with respect to the number of moles of borax.

In a fourth aspect, the present invention provides a device comprising the composition of the invention and a substrate. The device can be an electrochromic device, a photochromic device, or a thermochromic device, among others, depending on the external stimuli responsible for the color change (current, light or heat, respectively).

In the present invention the expression "substrate" means an inert support which does not negatively affect the external stimuli (either electrical current, heat, light, among others) applied on the device nor the color change produced in response to the stimuli. Illustrative non-limitative examples of substrates are glass, plastic, or metal, among others.

In another embodiment of the fourth aspect of the invention, the device comprises a layer made of the composition as defined in the first aspect of the invention.

In another embodiment of the fourth aspect of the invention, the device is an electrochromic device and comprises the composition of the invention and two substrates, the two substrates being positioned in such a way that it is allowed the transversal transmission of the current through the substrates.

In another embodiment of the fourth aspect of the invention, the device is an electrochromic device and comprises a layer made of the composition of the invention sandwiched between two substrates, each one of the substrates comprising one or more electrodes, wherein at least one of the substrates is transparent.

The electrode included in the substrate can be any material containing a conducting surface, electrically conducting thin layers, such as indium tin oxide (ITO), fluorine doped tin oxide (FTO), and/or doped zinc oxide oxides (TCOs), among others.

In another embodiment of the fourth aspect of the invention, the substrate comprises one or more electrodes, the one or more electrodes comprising on at least one of their sides, a layer of the composition of the first aspect of the invention. Thus generating what the inventors referred as a "rainbow-like" device, wherein each one of the electrodes shows an independent color behavior. There are well-known methods for manufacturing this kind of devices. An illustrative non-limitative way is provided below, in the section of Examples.

In another embodiment of the fourth aspect of the invention, the device is a two electrode electrochromic device wherein the composition layer is sandwiched between two electrodes. In the case of quasi-solid formulations, the electrochromic compositions were spread on the conducting side of one of the substrates provided with a spacer and then covered with the conducting side of the other substrate. The electrodes were clamped together. In the case of liquid compositions such as aqueous liquid system and composition comprising non-crosslinked PVA-4% employed for comparison, the electrochromic device was prepared in a sandwich-type structure as follows: A spacer was placed between the conducting sides of the substrates and the electrodes were clamped together. The electrochromic formulations were introduced by surface capillarity.

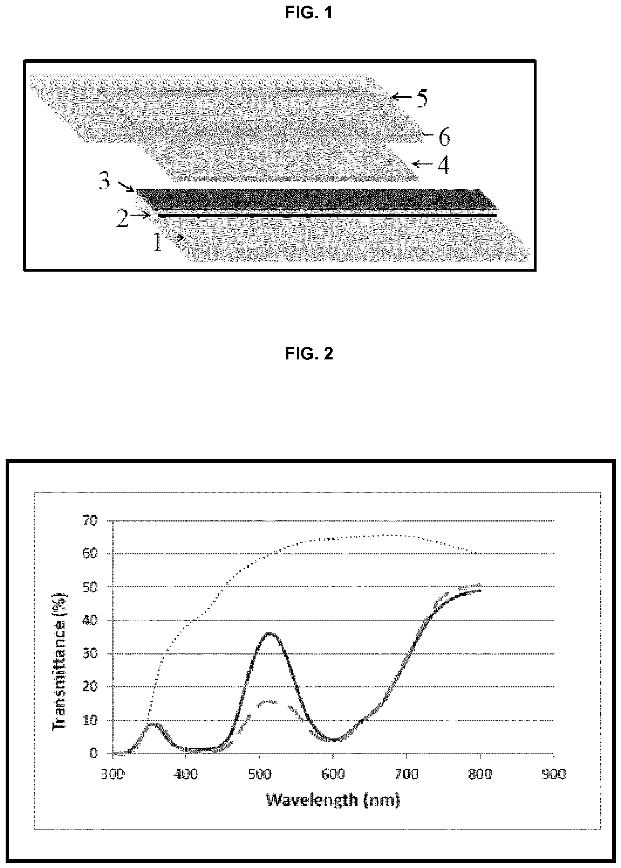

In another embodiment of the fourth aspect of the invention, the device is a three-electrode electrochromic device. The parts comprised in this kind of devices are schematically illustrated in FIG. 1. Briefly, it comprises a working electrode, a scribing, a pseudoreference electrode, a layer of the composition of the invention, a counter electrode, and a spacer (such as a double-side adhesive). The parts forming this type of device are commercially available, and the skilled person, using the general knowledge, can select the more appropriate electrodes and spacers. An illustrative non-limitative way is provided below, in the section of Examples. The three-electrode electrochromic device was prepared in a sandwich-type structure as follows: one of the substrates was electrically insulated into two sections. A metal and/or ionic salt ink was employed to draw a layer on one of these conducting sections which was employed as pseudoreference electrode after being cured (RE). The other section of the same substrate was employed as a working electrode (WE) while new substrate (without any treatment) provided with a spacer was used as counter electrode (CE).

The quasi-solid electrochromic compositions were spread on the conducting side of one of the substrates and then covered with the conducting side of the other substrate. The electrodes were clamped together. In the case of aqueous liquid system employed for comparison, the electrochromic device was prepared in a sandwich-type structure as follows: One of the substrates was electrically insulated into two sections. A metal and/or ionic salt ink was employed to draw a layer on one of these conducting sections which was employed as pseudoreference electrode after being cured (RE). The other section of the same substrate was employed as a working electrode (WE) while new substrate (without any treatment) provided with a spacer was used as counter electrode (CE). The electrodes were clamped together and the electrochromic formulations were introduced by surface capillarity.

### EXAMPLES

### Materials

Polyvinyl alcohol (PVA, Mw 61000), sodium tetraborate (borax, 99.5%), 4,4'-bipyridyl (98%), 2,4-dinitrochlorobenzene (99%), p-cyanoaniline (98%), potassium ferrocyanide (98.5%), potassium ferricyanide (99%) and 1,1'-diethyl-4,4'-bipyridinium dibromide (ethyl viologen dibromide, "EtViol", 99%), were purchased from Sigma-Aldrich and used without further purification. Required solvents such as acetonitrile, chloroform, acetone, ethanol, methanol and diethyl ether, were purchased from Scharlab and used as received. Fluorine-doped tin oxide (FTO) coated glass substrates (TEC, Rs 6-8 Ωsq⁻¹) and Tin-doped indium oxide glass substrates (ITO Sol 30/1.1, Rs 25-35 Ωsq⁻¹) were supplied by Solems and cleaned with warm acetone prior to use.

### - Synthesis of 1,1'-bis-(p-cyanophenyl)-4,4'-bipyridilium dichloride (p-cyanophenylviologen dichloride, "p-CV").

It was synthesized according to previously reported procedures (G. D. Short, "Disubstituted Bipyridylium Salts" Patent GB1310813) but replacing the solvent by water. Finally, the product was further purified by double recrystallization from methanol and ether, followed by drying in vacuo ¹H NMR (500 MHz, DMSO-d6, δ): 9.77 and 9.18 (d of d, 4H and 4H, Ar H), 8.35 and 8.23 (d of d, 4H and 4H, bipyridine); IR (bulk ATR): v = 3091 (C-H), 2227 (-CN), 1629, 1603 (C=C, C=N), 830 cm⁻¹ (o-phenylene H).

### Methods

- UV/Vis transmission/absorption spectra were measured with a Jasco V-570 spectrophotometer. The spectra were registered using a films holder accessory for solid samples, while the devices were connected to Biologic MPG potentiostat-galvanostat as a direct current source. Before recording the spectra measurement of the ECDs (%T or Abs as a function of the wavelength), the devices were exposed to the same voltage during 40 seconds with the aim of reaching the maximum colored state before starting the measurement.
- Fourier transform infrared (FT-IR) spectra was recorded on a 4100LE FTIR from Jasco. The IR spectra was obtained using Attenuated Total Reflectance (ATR) technique on the pure solid.
- Viscosity measurements were carried out in a TA instruments AR2000ex rheometer using a 40 mm plate-plate geometry. The flow procedure with a shear rate(s⁻¹) from 0.00001 to 1 was monitored at a constant temperature of 25°C.
- Color coordinates of the devices were determined using CIE 1976 L*a*b color space as quantitative scale to define th2e color, where L* represents the lightness of the color (L* = 0 yields black and L* = 100 indicates diffuse white), a* axis corresponds to the position between green and red (with green at negative a* values and red at positive a* values) and b* indicates the position between blue and yellow (with blue at negative b* values and yellow at positive b* values). Color coordinates were obtained using both spectrophotometric and colorimetric method. The colorimetric measurements were carried out with a spectroradiometer Konika Minolta CS-1000 A, while the spectrophotometric measurements were determined using the same spectrophotometer mentioned above following the method developed by R. J. Mortimer (R. J. Mortimer et al., "Quantification of colour stimuli through the calculation of CIE chromaticity coordinates and luminance data for application to in situ colorimetry studies of electrochromic materials", 2013, Displays, 32, 35-44).
- The spectroelectrochemistry study was carried out with the same potentiostat-galvanostat mentioned above.
- Manufacture of Two-electrode Electrochromic Devices

The electrochromic device was prepared as follows: A 220 µm double-side adhesive tape was placed on FTO-coated side and the electrochromic compositions were sandwiched between two FTO-coated glass substrates. The electrodes were clipped using paper clip clamps.

In the case of aqueous liquid system employed for comparison, the electrochromic formulations were introduced in the previously assembled device by surface capillarity.

### - Manufacture of Three-electrode Electrochromic Device

The electrochromic device was prepared as follows: 5 cm x 2.5 cm ITO coated glass substrate was electrically insulated by laser scribing into two sections having an approximate active area of 5 cm x 2 cm and 5 cm x 0.5 cm. Ag ink purchased from Acheson (Electrodag PF-410) was employed to draw a layer on the 5 cm x 0.5 cm section which was employed as pseudoreference electrode after being dried at 90 °C (RE). The other wider section of the same substrate was employed as a working electrode (WE) while new ITO-coated glass substrate (without any laser treatment) was used as counter electrode (CE). FIG. 1 shows a schematic view of the three-electrode electrochromic device configuration. A 220 µm double-side adhesive tape was placed on ITO-coated side of the counter electrode and the electrochromic compositions were sandwiched between two ITO-coated glass substrates. The electrodes were clipped using paper clip clamps.

### - Manufacture of a Rainbow-like Electrochromic Device

The electrochromic device was prepared as follows: 5 cm x 5 cm ITO coated glass substrate was electrically insulated by laser scribing into four different sections having all of them an approximate active area of 5 cm x 1 cm. Each section was employed as stand-alone working electrode (WE) for rainbow-like electrochromic device. Similarly laser scribing substrate was employed as counter electrode (CE). A 220 µm double-side adhesive tape was placed on ITO-coated side of the counter electrode and the electrochromic compositions were sandwiched between two ITO-coated glass substrates. The electrodes were clipped using paper clip clamps.

### Example 1: Preparation of the compositions of the invention 4a-i

This series of nine electrochromic compositions were fabricated by varying concentrations of p-cyanophenylviologen dichloride from 0.25 to 4.0 mmolL⁻¹ while keeping the concentration of ferro/ferricyanide potassium pair at a constant value of 0.4 mmolL⁻¹. These compositions were prepared as follows: to a previously prepared 4 wt % solution of PVA, aqueous solutions containing appropriate amounts of p-cyanophenylviologen dichloride and a 1:1 mixture of potassium ferrocyanide and potassium ferricyanide were added. The resulting mixtures were stirred until homogeneous solution was obtained. Then, each of these solutions were mixed with a 4 wt % borax aqueous solution in a 4:1 volume ratio by vigorous stirring with a spatula, until the formation of a gel. The composition was left to settle on its own until completely bubble-free material was obtained. The final concentrations of viologen for Composition 4a, Composition 4b, Composition 4c, Composition 4d, Composition 4e, Composition 4f, Composition 4g, Composition 4h and Composition 4i were 0.25, 0.5, 1.0, 1.5, 2.0, 2.5, 3.0, 3.5 and 4.0 mmolL⁻¹, respectively. All the compositions had a viscosity value of about 300 Pa·s.

All the compositions were prepared using water as solvent.

### Example 2: Preparation of the compositions of the invention 4h1-10

This series of ten electrochromic compositions were fabricated by varying concentrations of ferro/ferricyanide potassium pair from 0.2 to 5.0 mmolL⁻¹ while keeping the concentration of p-cyanophenylviologen dichloride at a constant value of 3.5 mmolL⁻¹. These compositions were prepared as described above for the preparation of compositions 4a-i. The final concentrations of ferro/ferricyanide potassium pair for Composition 4h1, Composition 4h2, Composition 4h3, Composition 4h4, Composition 4h5, Composition 4h6, Composition 4h7, Composition 4h8, Composition 4h9 and Composition 4h10 were 0.2, 0.4, 0.6, 0.8, 1.0, 1.5, 2.0, 3.0, 4.0 and 5.0 mmolL-1 respectively. All the compositions had a viscosity value of about 300 Pa·s.

All the compositions were prepared using water as solvent.

### Example 3: Preparation of the composition of the invention 3g9

This electrochromic composition was prepared keeping the final concentration of ethyl viologen dibromide at 20 mmolL⁻¹ and the concentration of the ferro/ferricyanide potassium pair at 6 mmolL⁻¹ value. This composition was prepared following the protocol as described above for the preparation of Compositions 4a-i. The resulting composition had a viscosity value of about 300 Pa·s.

All the compositions were prepared using water as solvent.

### Example 4: Preparation of the compositions of the invention 5a and 5b

These electrochromic compositions were fabricated by mixing a weight ratio of the Composition 3g9:Composition 4h9 (both obtained as described above) of 2:1 and 1:1 respectively, followed by vigorous stirring with spatula. The composition was left to settle on its own until completely bubble-free material was obtained.

The term "weight ratio" means the amount of composition 3g9 vs the amount of composition 4h9, both amounts being expressed in the same units.

### Example 5: Preparation of an aqueous composition comprising non-crosslinked PVA-4% (for comparative purposes)

A previously prepared 4 wt % solution of non-crosslinked PVA, was mixed with an aqueous solution containing required ammounts of p-cyanophenylviologen dichloride and a 1:1 mixture of potassium ferrocyanide and potassium ferricyanide to obtain a final concentrations of 3.5 and 4 mM respectively.. The resulting mixture was stirred until homogeneous solution was obtained. The viscosity of the resulting composition was 9.10⁻³ Pa·s.

### Example 6: Preparation of a composition of the invention comprising crosslinked PVA-borax 15%

A previously prepared 15 wt% solution of PVA, was mixed with an aqueous solution containing required ammounts of p-cyanophenylviologen dichloride and a 1:1 mixture of potassium ferrocyanide and potassium ferricyanide to obtain a final concentrations of 3.5 and 4 mM respectively. The resulting mixture was stirred until homogeneous solution was obtained. Then, the resulting solution was mixed with a 15 wt% borax aqueous solution in a 4:1 volume ratio by stirring with a spatula, until the cross-linking occurs. The viscosity of the resulting composition was 5·10⁵ Pa·s.

### Example 7: Preparation of an aqueous composition (for comparative purposes)

Appropriate amounts of p-cyanophenylviologen dichloride and 1:1 mixture of potassium ferrocyanide and potassium ferricyanide were dissolved in water to obtain a final concentrations of 3.5 mM of p cyanophenylviologen dichloride and 4 mM concentration of potassium ferrocyanide and potassium ferricyanide. No polymer was added to the mixture.

The resulting mixture was stirred at room temperature until homogeneous solution was obtained. The viscosity of the resulting composition was 1·10⁻³ Pa·s.

### Example 8: Electrochromism of a two-electrode electrochromic device with the aqueous composition of Example 7(for comparative purposes)

Two-electrode electrochromic device comprising the composition of the example 7 was prepared following the same protocol as disclosed above. FIG. 2 corresponds to the UV/Vis transmittance spectra of the device under different potentials (i.e. 0, -1.4 and -1.8 V) respectively. From the results obtained, it could be concluded that when the external voltage was set at ∼ - 1.4 V the ECD containing Composition PVA-4% exhibited two strong absorption bands (i.e. transmittance valleys in FIG. 2) at around 420 and 600 nm, characteristic of the green materials that absorb both the blue and red regions of the electromagnetic spectrum. Although some decrease of the transmittance for wavelengths around 500 nm was detected when once more cathodic potential of ∼ -1.8 V was applied, the transmittance spectrum is still typical of green materials, indicating no red coloration. This finding is opposite to the detected for borax containing formulations (e.g. example 9 below) indicating that borax-based reticulation is crucial to reach the red color.

### Example 9: Multichromism of a two-electrode device with the composition of the invention 4h9

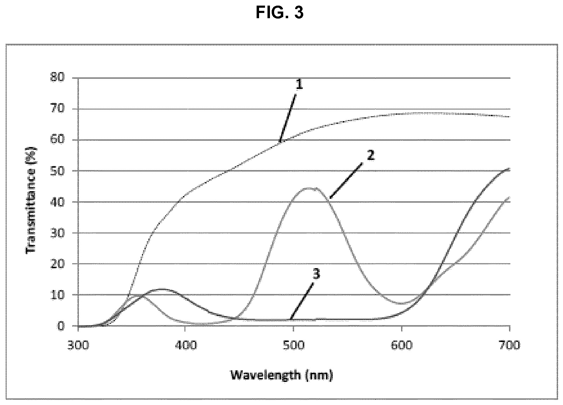

FIG. 3 shows UV/vis transmittance spectra.

Interestingly, in addition to the green color such as p-CV can provide and observed upon applying -1.4V voltage, red coloration occurred as a result of applying more cathodic potential of -1,8V.

It is remarkable that the non-water soluble composition comprising a di-reduced specie viologen compound of formula (I), such as p-CV, showing good electrochemical reversibility and cyclability as well as shorts switching time for the colored and bleached steps.

### Example 10: Multichromism comparison between a three-electrode device comprising the composition of the invention 4h9 and a three-eletrode device comprising the aqueous composition of Example 7

The three-electrode electrochromic device comprising the composition of the invention 4h9 was prepared following the protocol disclosed above.

For comparative purposes, a further three-electrode electrochromic device was manufacture using the aqueous system of Example 7 following the same protocol as disclosed above.

FIG. 4a shows the cyclic voltammetry of three-electrode ECDs containing the Composition 4h9 as well as a water solution containing the same amount of viologen and redox pair, but not the crosslinked polymer. In the potential range from ∼ 1.10 to ∼ -1.45 V, three well-defined peaks can be distinguished on the cathodic sweep of the scan of both systems. The first reduction peak (∼ -0.2 V) was assigned to the reduction of ferricyanide ion, the second reduction peak (∼ -0.5 V) was correlated with the green radical-cation (p-CV+.) formed by one-electron reduction of the dication (p-CV2+), while the third reduction peak (∼ -0.9 V) was related to the di-reduced form (p-CV0) obtained by one-electron reduction of the radical-cation. FIG. 4b corresponds to the UV/Vis transmittance spectra of devices under different potentials (i.e. 0, -0.5 and -0.9 V) respectively. From the results obtained, it could be concluded that the ECD containing Composition 4h9 exhibited green coloration when the external voltage was set at ∼ -0.5 V, and the color turned into the red upon applying external voltage of ∼ -0.9 V. By comparing the UV/Vis transmittance spectra (FIG. 4b), different absorption features were observed in the case of Composition 4h9. When the applied potential was set at ∼ -0.5 V, the ECD exhibited two strong absorption bands (i.e. transmittance valleys in FIG. 4b) at around 420 and 600 nm, characteristic of the green materials that absorb both the blue and red regions of the electromagnetic spectrum. Once more cathodic potential of ∼ -0.9 V was applied, the transmittance is quenched (indicating very significant absorption) around 500 nm and the ECD color turned into the red. After the potential was set again to 0 V, the ECD turned back to its original colorless form, showing reversible response.

Nevertheless, in the case of aqueous liquid system, the results revealed that upon applying a switching voltage of ∼ -0.9V, the device showed mainly dark green coloration and the corresponding transmittance profiles (FIG. 4b). The electrochromic properties and color coordinates (D65) CIE L*a*b are summarized in Table 1. The results from the aqueous liquid-based ECD show that even though the applied potential is sufficiently negative for di-reduction to occur, the red coloration is not observed. This can be attributed to the comproportionation mechanism which is more likely to happen in the aqueous liquid system.

With the data provided above, it can be concluded that the viscosity of the composition seems to avoid the di-reduced species and the dications to meet, preventing the comproportionation process and consequently the red coloration of the di-reduced species is observed upon applying suitable voltage of -0.9 V. These results revealed that the presence of the crosslinked polymer matrix at such values of viscosity acts as a stabilizer enabling dual electrochromic behavior, while greatly simplifies the ECDs manufacturing process.

**Table 1:**

| Composition | Potential (V) | Δ%T^{(a)} | t_{c}(s)^{(b)} | t_{b}(s)^{(c)} | η(cm² C⁻¹)^{(d)} | L*^{(e)} | a*^{(e)} | b*^{(e)} | L*^{(f)} | a*^{(f)} | b*^{(f)} |
|---|---|---|---|---|---|---|---|---|---|---|---|
| 4h9 | -1.4 | 61 | 16 | 8 | 78 | 62 | -44 | 27 | 21 | -27 | 16 |
| | -1.8 | 58 | 14 | 4 | 83 | 29 | 38 | -15 | 6 | 9 | 2 |
| Aqueous system | -2.2 | 62 | 8 | 10 | 179 | 28 | -16 | 8 | 5 | -3 | 3 |
| | -2.4 | 62 | 9 | 15 | 166 | 29 | -17 | 10 | 12 | -1 | -1 |

| | | | | | | | | | | | |
|---|---|---|---|---|---|---|---|---|---|---|---|
| ^{a)} Optical contrast: (%T_{b} - %T_{c}) being T_{b} = transmittance at bleached state and T_{c} = transmittance at colored state. ^{b),c)} Switching times: time required for 90% of the total transmittance change to occur at the maximum contrast wavelength for the colored (t_{c}) and bleached steps (t_{b}). ^{d)} Color efficiency: [(ΔOD = log(T_{c/}T_{b}))/(Q/A)] being A = device area and Q = injected/ejected charge. ^{e),f)} Color coordinates obtained by spectrophotometric method (^{(e)}) and colorimetric method (^{(f)}). | | | | | | | | | | | |

### Example 11: Preparation of the composition of the invention 1g8

This electrochromic composition was prepared keeping the final concentration of 1-ethyl-1'-(p-cyanophenyl)-4,4'-bipyridinium dibromide (Et-pCNVio) at 20 mmolL-1 and the concentration of the ferro/ferricyanide potassium pair at 5 mmolL-1 value. This composition was prepared following the protocol as described above for the preparation of Compositions 4a-i. The resulting composition had a viscosity value of about 300 Pa·s.

### Example 12: Preparation of the composition of the invention 2g8

This electrochromic composition was prepared keeping the final concentration 1-benzyl-1'-(p-cyanophenyl)-4,4'-bipyridinium dibromide (Bn-pCNVio) at 20 mmolL-1 and the concentration of the ferro/ferricyanide potassium pair at 5 mmolL-1 value. This composition was prepared following the protocol as described above for the preparation of Compositions 4a-i. The resulting composition had a viscosity value of about 300 Pa·s.

### Example 13: Preparation of the composition of the invention 5c

This electrochromic compositions was fabricated by mixing a weight ratio of the Composition 3g9:Composition 1g8 (both obtained as described above) of 2:1, followed by vigorous stirring with spatula. The composition was left to settle on its own until completely bubble-free material was obtained.
The term "weight ratio" means the amount of composition 3g9 vs the amount of composition 1g8, both amounts being expressed in the same units.

### Example 14: Preparation of the composition of the invention 5d

This electrochromic compositions was fabricated by mixing a weight ratio of the Composition 3g9:Composition 2g8 (both obtained as described above) of 2:1, followed by vigorous stirring with spatula. The composition was left to settle on its own until completely bubble-free material was obtained.
The term "weight ratio" means the amount of composition 3g9 vs the amount of composition 2g8, both amounts being expressed in the same units.

### Example 15: Multichromism of a three-electrode device comprising the composition of the invention 5a

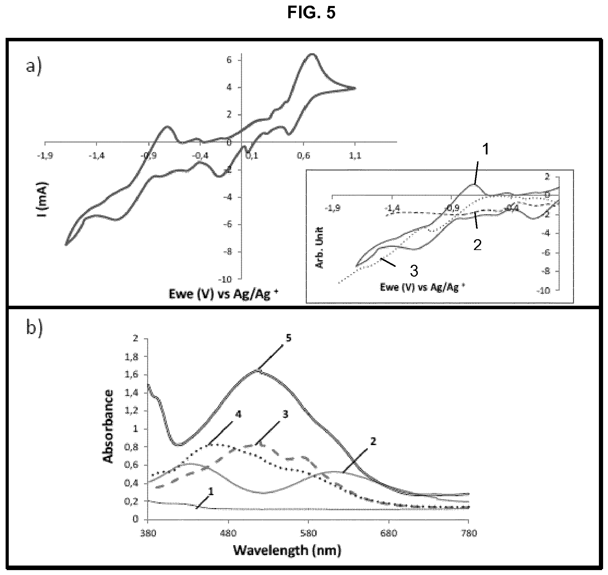

A three-electrode device was manufactured with the composition 5a, following the protocol provided above, and the absorbance spectrum, applying different potentials, is provided in FIG. 5.

In the potential range from 0 to -1.7 V (FIG: 5A), five well-defined features were observed during the cathodic sweep. As shown in the inset, there is good agreement between these features and the sum of those detected in devices based on the single-compositions 4h9 and 3g9 separately. The first reduction peak (∼ -0.2 V) is assigned to the uncolored redox process of ferricyanide ion, while the second peak (∼ -0.6 V) and the third (∼ -0.8 V) are correlated with first and second reduction of the p-CV respectively. The fourth and fifth peak observed (∼ -1.2 and ∼ -1.6 V) seem to be related to the radical-cation of the EtVio (EtVio+.) formed by one-electron reduction of the dication (EtVio2+) and the di-reduced form (EtVio0) obtained by one-electron reduction of the radical-cation, respectively.

As no significant overlap in the redox potentials of the p-CV and EtVio was detected in the CV of the Composition 5a-based ECD, the latter is expected to behave as a multi-electrochromic device. The multi-electrochromic behavior encompassing five different colorations: colorless (0 V), green (∼ - 0.7 V), pink-violet (∼ -0.9 V), orange (∼ -1.1 V) and purple (∼ -1.7 V) was visually confirmed. The absorbance spectrum (FIG. 5b) of the three-electrode ECD after applying a switching voltage of ∼ -0.7 V was characteristic of green materials with two absorption bands at around 420 and 600 nm. As more cathodic potential of ∼ -0.9 V was applied the ECD exhibited broader band with it maximum located at 520 nm which is in good agreement with the observed violet coloration. For a more negative potential of -1.1 V the absorption band showed hypsochromic shift to give a maximum absorption band at 460 nm characteristic of orange materials. Once more cathodic potential of -1.7 V was set, ECD exhibited strong absorption band at around 520 and new band grew up from 415 to 380 nm where the spectra ends. Table 2 summarizes the color coordinates determined by spectrophotometric method.

**Table 2: Color coordinates (D65) xyY(1931) and L*a*b (1976) of Composition 5a**

| Potential | Colour Coordinates xyY (1931) | | | Colour Coordinates L*a*b* (1976) | | |
|---|---|---|---|---|---|---|
| | x | y | Y | L* | a* | b* |
| Off | 0,316 | 0,335 | 77,492 | 91 | -1 | 3 |
| -0,5 V | 0,316 | 0,375 | 63,391 | 84 | -17 | 15 |
| -0,7 V | 0,305 | 0,388 | 41,052 | 70 | -23 | 15 |
| -0,9 V | 0,367 | 0,289 | 23,656 | 56 | 32 | -4 |
| -1,1 V | 0,402 | 0,363 | 29,247 | 61 | 17 | 21 |
| -1,3 V | 0,434 | 0,339 | 18,995 | 51 | 30 | 17 |
| -1,5 V | 0,444 | 0,309 | 11,098 | 40 | 35 | 9 |
| -1,7 V | 0,402 | 0,245 | 6,356 | 30 | 40 | -8 |

It is noted that the reproducibility and the electrochemical reversibility of Composition 5a was assessed by measuring color coordinates of three ECDs at each potential and, evolution of CV upon cycling. On the basis of the results, Composition 5a system provides highly reproducible and electrochemical reversibility multi-ECDs with well-defined colorations. Therefore, multi-electrochromic compositions may contribute an interesting accomplishment that addresses the shortcomings explained above and frequently present in multi-EC systems such as the device complexity or not distinct enough coloration in their different redox states, among others.

### Example 16: Multichromism of a Rainbow-like device comprising the composition of the invention 5a

The fabrication process of Rainbow-like ECDs was very easy, as it has been disclosed above, being only necessary to sandwich the Composition 5a between two ITO-coated glass substrates previously zoned in rows by laser scribing.

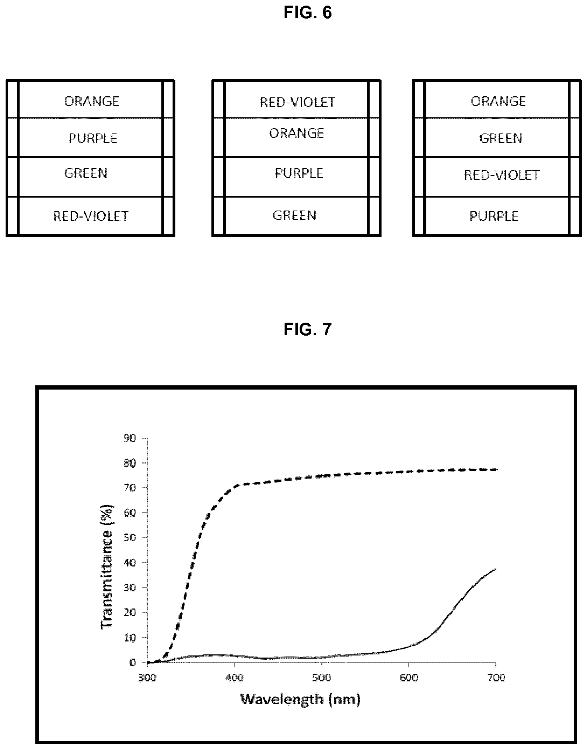

Applying a voltage in the range from -0.7 to -1.7 V, it was found that each row exhibited multi-electrochromic behavior enabling adjustment of their color independently and changing over time under suitable applied potentials according to the needs. FIG. 6 shows a schematic representation of the resulting device.

### Example 17: Multichromism of a device comprising the composition of the invention 5b

The three-electrode electrochromic device comprising the composition of the invention 5b was prepared following the protocol disclosed above. The resulting electrochromic device showed very low transmission in most of the visible range when the applied potential was set at -1.9 V (FIG. 7). The very low transmission is comparable to that previously reported by using other approaches such as double layered working electrode and counter electrodes, or through two working electrodes and two counter electrodes.

Therefore, multi-EC composition-based devices appear also to be very promising for effective blocking of the whole visible radiation in smart windows.

### REFERENCES CITED IN THE APPLICATION

GB1310813;
R. J. Mortimer et al., Quantification of colour stimuli through the calculation of CIE chromaticity coordinates and luminance data for application to in situ colorimetry studies of electrochromic materials, Displays 2013, 32, 35-44; and
McLaughlin M. et al., "The Gelation of Poly(Vinyl Alcohol) with Na2B4O7.10H2O: Killing Slime", 1997, J. Chem. Educ. 47, 97-99.

## Claims

1. A multichromic composition comprising:
(a) a compound of formula (I) 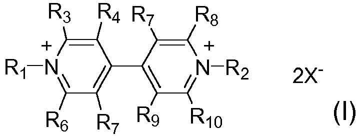
(b) a polymeric matrix comprising a crosslinked polymer, the matrix having a viscosity value comprised from 1 x 10⁻³ to 1 x 10¹² Pa·s,
(c) a redox pair, and
(d) a solvent,
the compound of formula (I) and the redox pair being embedded in the polymeric matrix; and
wherein:
one of R₁ and R₂ is a known ring system from 5 to 14 carbon atoms, the system comprising from 1 to 3 rings, where:
each one of the rings is saturated, partially unsaturated, or aromatic;
the rings are isolated, partially or totally fused,
each one of the members forming the known ring system is selected from the group consisting of: -CH-, -CH₂-, -NH-, -N-, -SH-, -S-, and -O-; and
the ring system is optionally substituted by one or more radicals independently selected from the group consisting of (C₁-C₆)alkyl, (C₁-C₆)haloalkyl, (C₁-C₆)alkoxy, (C₅-C₁₄)aryloxy, nitro, cyano, and halogen;
and the other is a radical selected from the group consisting of a (C₁-C₂₀)alkyl; (C₁-C₂₀)alkyl substituted with one or more (C₁-C₅)alkyl, -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals; a 2 to 20-member heteroalkyl; a 2 to 20-member heteroalkyl substituted with one or more -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals; (C₂-C₂₀)alkenyl; (C₂-C₂₀)alkenyl substituted with one or more (C₁-C₅)alkyl, -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals; (C₂-C₂₀)alkynyl; (C₂-C₂₀)alkynyl substituted with one or two (C₁-C₅)alkyl, -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals; and
a known ring system from 5 to 14 carbon atoms, the system comprising from 1 to 3 rings, where:
each one of the rings is saturated, partially unsaturated, or aromatic;
the rings are isolated, partially or totally fused,
each one of the members forming the known ring system is selected from the group consisting of: -CH-, -CH₂-, -NH-, -N-, -SH-, -S-, and -O-; and
the ring system is optionally substituted by one or more radicals independently selected from the group consisting of (C₁-C₆)alkyl, (C₁-C₆)haloalkyl, (C₁-C₆)alkoxy, (C₅-C₁₄)aryloxy, nitro, cyano, and halogen;
R₃ to R₁₀ are radicals independently selected from the group consisting of hydrogen; (C₁-C₂₀)alkyl; (C₁-C₂₀)alkyl substituted by one or more radicals selected from the group consisting of: halogen, -OH, and -NO₂; (C₁-C₂₀)alkoxy; cyano; and nitro; and
X is a monocharged anion.

2. The multichromic composition according to any one of the preceding claims, wherein R₁ and R₂ are the same and mean a known ring system as defined in claim 1.

3. The multichromic composition according to any one of the preceding claims, wherein both R₁ and R₂ are the same and represent a known ring system comprising one aromatic ring optionally substituted with one or more radicals selected from the group consisting of (C₁-C₆)alkyl, (C₁-C₆)haloalkyl, (C₁-C₆)alkoxy, (C₅-C₁₄)aryloxy, nitro, cyano, and halogen.

4. The multichromic composition according to claim 3, wherein R₁ and R₂ are phenyl radicals optionally substituted with one or more radicals selected from the group consisting of: (C₁-C₆)alkyl, (C₁-C₆)haloalkyl, (C₁-C₆)alkoxy, nitro, cyano, and halogen.

5. The multichromic composition according to any one of the preceding claims, wherein R₃ to R₁₀ are hydrogen.

6. The multichromic composition according to any of the preceding claims, wherein the compound of formula (I) corresponds to:

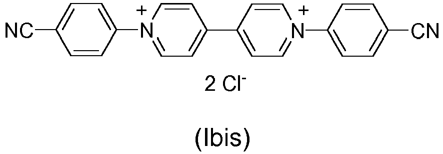

7. The multichromic composition according to any one of the preceding claims, wherein the crosslinked-polymer is a crosslinked polyvinyl alcohol.

8. The multichromic composition according to any one of the preceding claims, wherein the crosslinked polymer is a borate crosslinked polyvinyl alcohol.

9. The multichromic composition of any of the preceding claims comprising:
(a) the compound of formula (Ibis) at a concentration of 3.5 mM,
(b) the borate crosslinked polyvinyl alcohol having a viscosity of about 300 Pa·s,
(c) a redox pair Fe(CN)₆]³⁻/[Fe(CN)₆]⁴⁻ at a concentration of 4 mM; and
(d) the solvent is water.

10. The multichromic composition according to any of the preceding claims, which comprises, in addition to the compound of formula (I), one or more further viologens.

11. The multichromic composition according to claim 10, wherein the further viologen is a compound of formula (III): 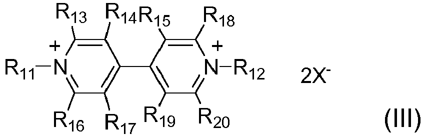 wherein
R₁₁ and R₁₂ are the same or different and are selected from the group consisting of a (C₁-C₂₀)alkyl; (C₁-C₂₀)alkyl substituted with one or more (C₁-C₅)alkyl, -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals; a 2 to 20-member heteroalkyl; a 2 to 20-member heteroalkyl substituted with one or more -OH, halogen, phenyl, phenyl substituted with one or more (C₁-C₄)alkyl radicals, phenyl substituted with one or more halogen radicals, benzyl, benzyl substituted with one or more (C₁-C₄)alkyl radicals, or benzyl substituted with one or more halogen radicals;
R₁₃ to R₂₀ are radicals independently selected from the group consisting of hydrogen; (C₁-C₂₀)alkyl; (C₁-C₂₀)alkyl substituted by one or more radicals selected from the group consisting of: halogen, -OH, and -NO₂; (C₁-C₂₀)alkoxy; cyano; and nitro; and
X is a monocharged anion.

12. The multichromic composition according to any one of the claims 10-11, wherein the further viologen is a compound of formula (III) wherein R₁₁ and R₁₂ are the same.

13. The multichromic composition according to any one of the claims 10-12, wherein the further viologen is a compound of formula (III) wherein R₁₁ and R₁₂ are (C₁-C₂₀)alkyl.

14. The multichromic composition according to any one of the claims 10-13, wherein the further viologen is 1,1'-diethyl-4,4'-bipyridinium dibromide.

15. A process for preparing a multichromic composition having a viscosity value comprised from 1 x 10⁻³ to 1 x 10¹² Pa·s, according to any one of the claims 1-14, the process comprising the steps of:
(a1) mixing an appropriate amount of a non-crosslinked polymer solution with an appropriate amount of a solution of a compound of formula (I) as defined above and an appropriate amount of a redox pair solution; and
(b1) adding an appropriate amount of polymeric crosslinking agent solution to the resulting mixture of step (a1) or, alternatively,
(a2) mixing an appropriate amount of non-crosslinked polymer solution with an appropriate amount of crosslinking agent solution;
(b2) adding an appropriate amount of compound of formula (I) with an appropriate amount of redox pair; and
(c2) mixing the solutions resulting from steps (a2) and (b2) above; or alternatively,
(a3) mixing an appropriate amount of non-crosslinked polymer with an appropriate amount of a compound of formula (I) and an appropriate amount of a redox pair,
(b3) dissolving the resulting mixture in an appropriate solvent; and
(c3) adding an appropriate amount of a polymeric crosslinking agent solution to the resulting solution of step (b3)

16. The process of claim 15, which comprises a further step of adding one or more additional viologen solution(s).

17. A device comprising the composition as defined in any of the claims 1-14 and a substrate.

18. The device of claim 17, which comprises one or more electrodes over the substrate, the one or more electrodes comprising over the sides, a layer of the composition as defined in any one of the claims 1-14..
